# EUROPEAN PATENT SPECIFICATION

(11) **EP 1 919 175 B1**
(45) Date of publication and mention of the grant of the patent: **14.11.2012**
(21) Application number: 07022795.4
(22) Date of filing: 16.05.2002
(51) Int. Cl.: H04M 1/725, H04M 1/02

(54) **Mobile communication terminal**
Mobiles Kommunikationsendgerät
Terminal de communication mobile

(30) Priority: 21.06.2001 KR 20010035334
(43) Date of publication of application: 07.05.2008
(62) Divisional of application: 02010955.9
(73) Proprietor: LG ELECTRONICS INC., Youngdungpo-gu Seoul (KR)
(72) Inventor: Jeon, Byung-Su, Daegu (KR)
(74) Representative: Urner, Peter

(56) References cited:
- EP-A- 1 004 957
- EP-A- 1 033 644
- EP-A1- 0 961 461
- WO-A1-00/65800
- US-A- 5 414 444

## Description

### 1. Field of the Invention

The present invention relates to a folder type mobile communication terminal and its operating method, and more particularly, to a folder type mobile communication terminal that is capable of improving utilization of an auxiliary display unit, and its control method.

### 2. Description of the Background Art

In general, according to its form, a mobile communication terminal is classified into a bar type mobile communication terminal of which a keypad is exposed, a flip type mobile communication terminal of which a cover is formed at a keypad, and a folder type mobile communication terminal of which a main body and a cover body are folded.

Especially, referring to the folder type mobile communication terminal, as it is folded, its size becomes small and its weight is light, so that it is convenient to be carried and as such it is widely used.

However, in the conventional folder type mobile communication terminal, its display unit is installed at the main body of the mobile communication terminal or at the inner surface of the folder. Thus, once the folder type mobile communication is folded, the display unit is covered to be placed at the inner

Therefore, in a state that the folder type mobile communication terminal is folded, the display unit is hardly checked, causing a problem that it is not possible to check a charged state of a battery, time or whether a message has reached.

In order to solve the problem, an auxiliary display unit is additionally installed at an outer surface of the folder of the folder type mobile communication terminal, so that mobile communication terminal information can be used even when the folder type mobile communication terminal is closed.

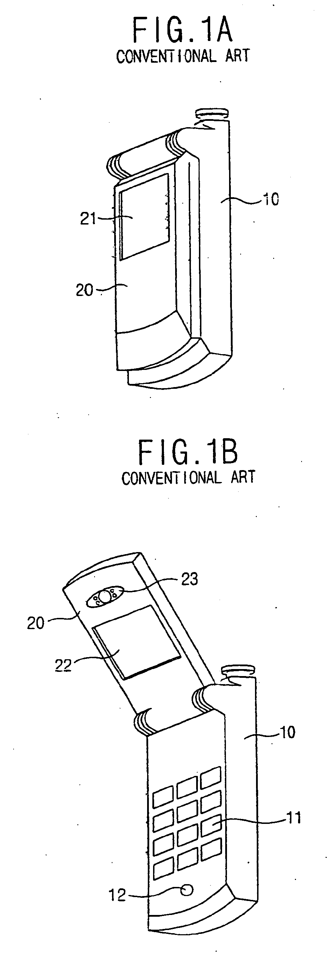

Figures 1A and 1B are drawings illustrating the folder type mobile communication terminal including an auxiliary display unit.

As shown in Figures 1A and 1B, in a folder type mobile communication terminal having a main body 10 and a folder 20 hinged at the main body 10 and rotatably operated centering around a rotational shaft, an auxiliary display unit 21 is formed at an outer surface of the folder 20 and a main display unit 22 is formed at an inner surface of the folder 20.

A keypad 11 consisting of a number key, a power key and a function key and a microphone 12 are formed at the inner surface of the main body 10. A content inputted through the keypad 11 is displayed on the main display unit 22.

A speaker 23 is formed at the inner surface of the folder 20.

When the folder 20 is opened and a power is applied, a state of the mobile communication terminal such as a remaining battery capacity and an electric field strength is displayed on the main display unit 22, and a call time, whether a message has received and an inputted character or number are displayed. Also, the entire information of the mobile communication terminal such as a date or time is displayed.

That is, when the folder 20 is closed, power is cut off and no information is displayed on the main display unit 22, while when the folder 20 is opened, power is applied and information is displayed.

Even when the folder type mobile communication terminal is in a destination standby state that the folder 20 is closed, the electric field strength of the mobile communication terminal, a message receiving state, a remaining battery capacity or time can be checked through the auxiliary display unit 21 attached at the outer surface of the folder 20.

Since the auxiliary display unit 21 is positioned at an outer surface of the folder 20, the conventional folder mobile communication terminal is convenient to use in that it can check the state of the mobile communication state even when the folder 20 is in a closed state. However, only the main display unit 22 is used when an operation such as transmission of a short message or using of a wireless Internet is to be performed by opening the folder 20.

In other words, in the conventional folder type mobile communication terminal, since the main display unit and the auxiliary display unit are attached at the opposite surface of the folder, the auxiliary display unit and the main display unit can not be used simultaneously, thus degrading its utilization.

In addition, in the conventional folder type mobile communication terminal, since the main display unit and the auxiliary display unit are respectively attached at the inner surface and the outer surface of the folder, its thickness becomes thick, so that it is difficult to make a compact size.

The above references are incorporated by reference herein where appropriate for appropriate teachings of additional or alternative details, features and/or technical background.

### SUMMARY OF THE INVENTION

Therefore, an object of the present invention is to provide a mobile terminal providing a convenient way for accessing Internet pages. The object is solved by the features of the independent claim. Further advantageous embodiments are described in the dependent claims.

EP 1 004 957 A1 describes a mobile terminal comprising an LCD screen and a main soft key, which is located below the LCD screen, wherein first and second auxiliary soft keys are provided on both sides of the main soft key. There is a keypad below the soft keys.

EP 0 961 461 A1 describes a communication terminal having a rotary operation knob for operating the mobile phone. The rotation key is designed to be rotated, pushed and slid, wherein the movement direction or movement amount of the cursor can be changed when the rotating key is slid so that the cursor can reach at a desired item quickly, thereby reducing the rotating amount.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figures 1A and 1B are drawings illustrating the structure of a folder type mobile communication terminal in accordance with a conventional art;
Figures 2A and 2B, Figures 3A and 3B, Figures 4A and 4B, Figures 5A and 5B and Figures 6A and 6B are drawings illustrating each embodiment of a folder type mobile communication terminal in accordance with the present invention;
Figure 7 is a detailed block diagram showing the construction of the older type mobile communication terminal in accordance with the present invention;
Figure 8 is a flow chart of an operating method of the folder type mobile communication terminal in accordance with the present invention;
Figures 9, 10 and 11 are drawings illustrating an Internet searching method using the folder type mobile communication terminal in accordance with the present invention; and
Figures 12, 13 and 14 are drawings illustrating a chatting method using the folder type mobile communication terminal in accordance with the present invention.

### DETAILED DESCRIPTION OF THE PREFERRED EMBODIMENTS

A folder type mobile communication terminal and its controlling method in accordance with the present invention will now be described with reference to the accompanying drawings.

The folder type mobile communication terminal of the present invention is constructed that an auxiliary display unit is formed at a certain position of a main body and an opening unit is formed at a folder portion facing the auxiliary display unit so that the auxiliary display unit can be checked from outside when the folder is both in an opened and in a closed state.

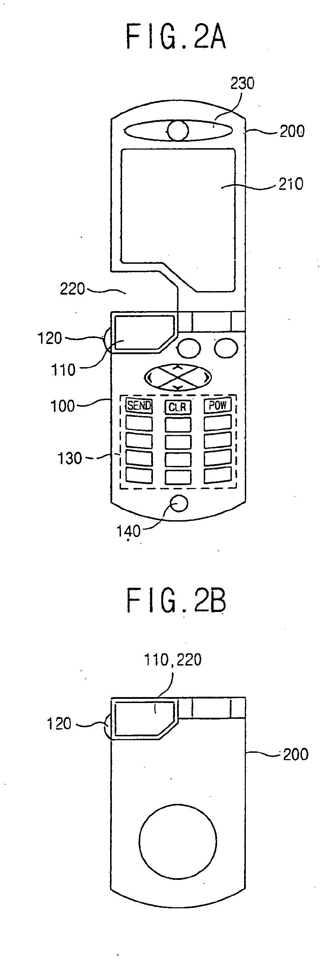

Figures 2A and 2B, Figures 3A and 3B, Figures 4A and 4B, Figures 5A and 5B and Figures 6A and 6B are drawings illustrating each embodiment of a folder type mobile communication terminal in accordance with the present invention.

As shown in Figures 2A and 2B, a folder type mobile communication terminal in accordance with a first embodiment of the present invention includes: a main body 100; an auxiliary display unit 110 formed at a left upper end of the inner surface of the main body; a folder 200 hinged at the main body 100 and having an opening unit 220 to view the auxiliary display unit 110 no matter whether the folder 200 is opened or closed; and a main display unit 210 formed at an inner surface of the folder 200.

A wheel button 120 is additionally installed at left side or right side of the main body 100 to utilize the auxiliary display unit 110.

A keypad 130 including a number key, a power key and a function key is installed at a lower side of the auxiliary display unit 110 at the inner surface of the main body 100. A microphone 140 is formed at the lowermost side. The folder 200 includes a speaker 230 and the main display unit 210 for displaying information for the user.

The auxiliary display unit 110 improves utilization by displaying the current state such as an electric field strength, whether a message has received, and time when the mobile communication terminal in a destination standby state and by assisting the main display unit 210 when the mobile communication is in use.

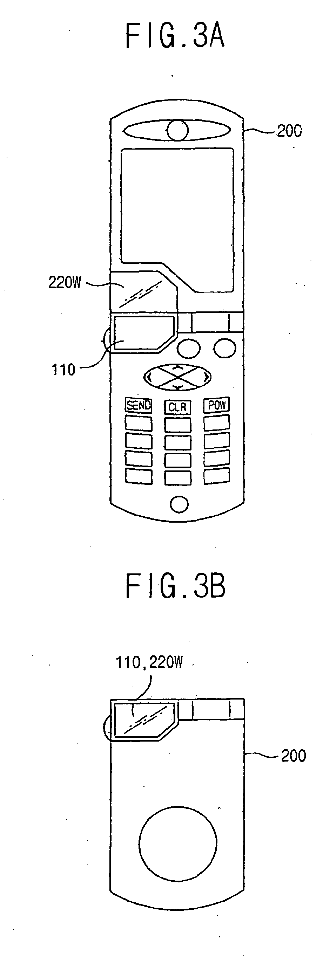

Figures 3A and 3B,are drawings illustrating that a transparent window 220W is additionally formed at the opening unit 220 of the folder 200 to protect the auxiliary display unit 110 and view the auxiliary display unit 110 even when the folder 200 is in a closed state.

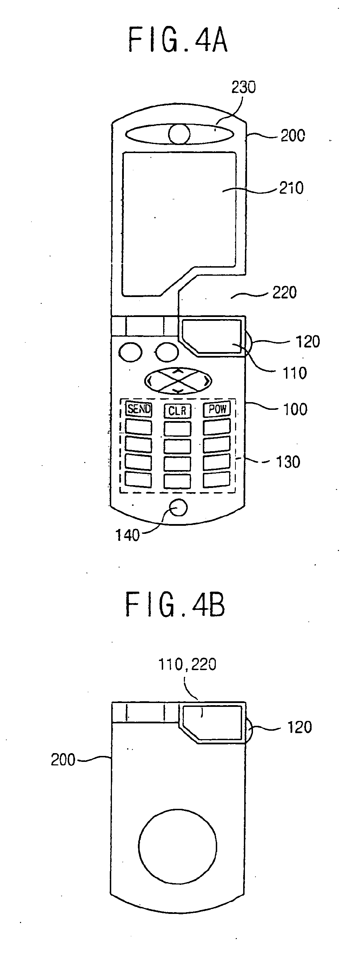

As shown in Figures 4A and 4B, a folder type mobile communication terminal in accordance with a second embodiment of the present invention includes: a main body 100; an auxiliary display unit 110 formed at a right upper end of the inner surface of the main body; a folder 200 hinged at the main body 100 and having an opening unit 220 to view the auxiliary display unit 110 no matter whether the folder 200 is opened or closed; and a main display unit 210 formed at an inner surface of the folder 200.

A wheel button 120 for utilizing the auxiliary display unit is additionally installed, and a transparent window 220W is also additionally formed at the opening unit 220 to protect the auxiliary display unit 110 and view the auxiliary display unit 110 even when the folder 200 is in a closed state.

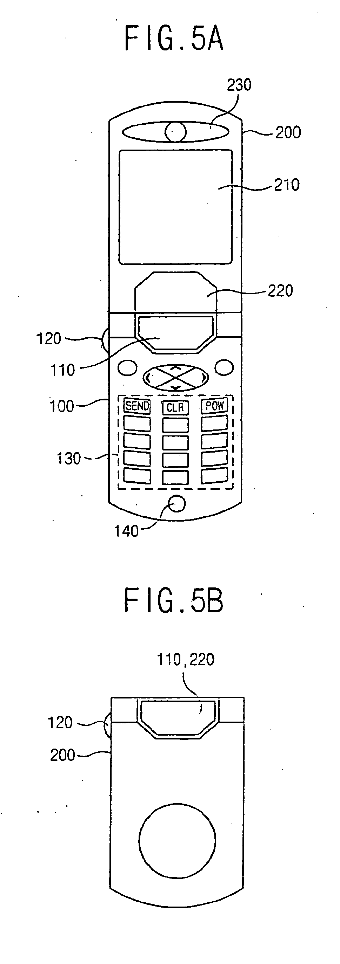

Figures 5A and 5B are drawings illustrating a third embodiment of a folder type mobile communication terminal in accordance with the present invention.

As shown in Figures 5A and 5B, a folder type mobile communication terminal in accordance with a third embodiment of the present invention includes: a main body 100; an auxiliary display unit 110 formed at a middle upper end of the inner surface of the main body; a folder 200 hinged at the main body 100 and having an opening unit 220 to view the auxiliary display unit 110 no matter whether the folder 200 is opened or closed; and a main display unit 210 formed at an inner surface of the folder 200.

A wheel button 120 is additionally formed at the main body 100 to utilize the auxiliary display unit 110.

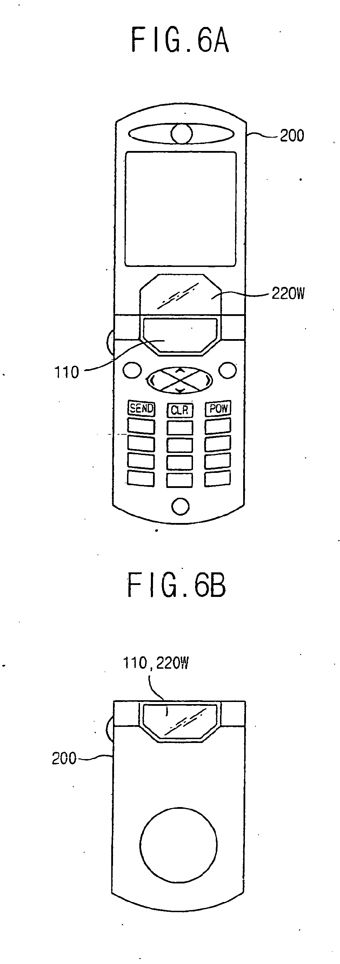

Figure 6 is drawing illustrating that a transparent window 220W is additionally formed at the opening unit 220 of the folder 200 to assist the auxiliary display unit 110.

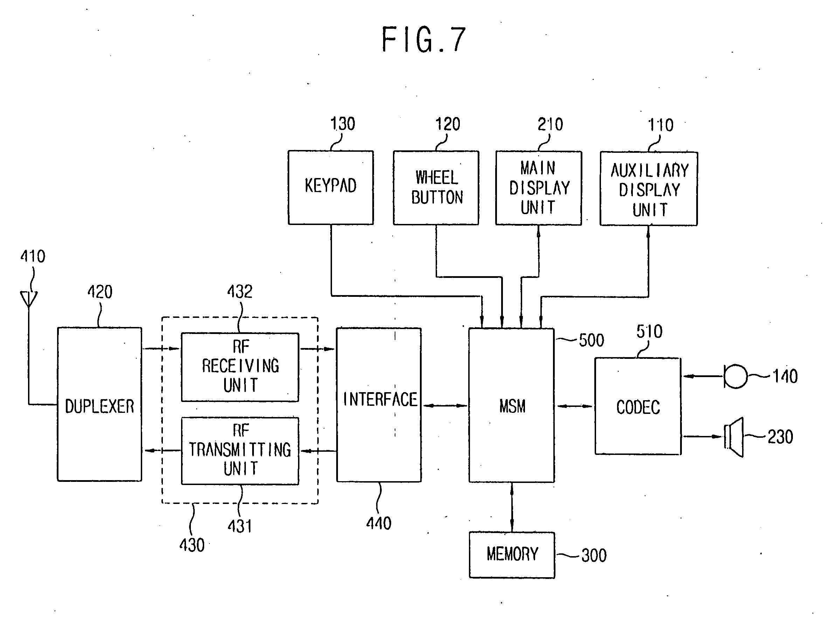

Figure 7 is a detailed block diagram showing the construction of the folder type mobile communication terminal in accordance with the present invention.

As shown in Figure 7, the folder type mobile communication terminal of the present invention includes: a mobile station modem (MSM) for controlling a mobile communication terminal for enabling a general phone call and an Internet communication; a duplexer 420 for separating a signal transmitting and received to and from a base station through an antenna 410; a transmitting and receiving unit 430 for transmitting and receiving a signal received through the antenna 410 and an internal signal of the mobile communication terminal as a radio frequency; a keypad 130 for transmitting a key value inputted from a user to the mobile station modem 500; a main display unit 210 for displaying the state and information of the mobile phone for the user according to a control signal of the mobile station modem 500; an auxiliary display unit 110 installed at an inner surface of the main body to easily utilize the main display unit 210 and allowing the user to view the state in which the folder is both in an opened and closed state; and a CODEC 510 for coding a voice signal inputted through a microphone 140, decoding an output signal of the mobile station modem 500 and outputting it to the speaker 230.

A wheel button 120 is additionally installed to be manipulated by the user to easily utilize the auxiliary display unit 110.

The transmitting and receiving unit 430 includes an RF transmitting unit 431 for modulating a signal outputted from the mobile station modem 500 into an RF signal through an interface 440 and transmitting it to outside through the duplexer 420 and the antenna 410; and an RF receiving unit 432 for demodulating the RF signal received through the antenna 410 and the duplexer 420, and outputting it to the mobile station modem 500 through the interface 440.

Even when the folder is opened and a text message and other operation is being performed, the auxiliary display unit 110 can check time, and displays history information for an Internet page opened in using the wireless Internet so that the user can directly move to a desired Internet page.

In case that the auxiliary display unit 110 is used as a conversation window in a chatting and the same conversation content is inputted, a corresponding sentence is selected and designated among displayed conversation sentences, so that a conversation input can be performed.

At this time, by using the wheel button 120, the wheel can be rotated to scroll a character or an Internet page without depressing the keypad 130 several times.

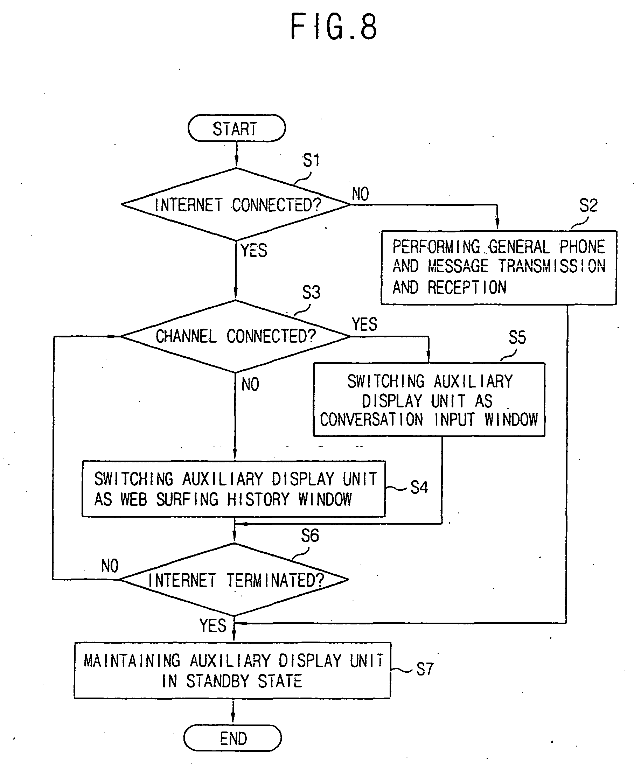

The operation method of the folder type mobile communication terminal constructed as described above will now be explained with reference to Figure 8.

As shown in Figure 8, when the folder of the folder type mobile communication terminal is opened and in an input standby state, it is determined whether a user is connected to the wireless Internet (step S1).

If the user is not connected to the wireless Internet, the mobile communication terminal performs a general phone function or a message transmission function according to an instruction inputted from the user (step S2).

If, however, it is determined that the user is connected to the wireless Internet, it is checked whether the user is to perform a chatting by using the mobile communication terminal (step S3).

If the user selects not to chat, the auxiliary display unit 110 is switched to an Internet searching history window to allow the Internet searching (step S4).

If, however, the user selects chatting, the auxiliary display unit 110 is switched to a conversation input window (step S5).

When the user terminates chatting or the Internet searching, it is checked whether the connection to the wireless Internet connected through the folder type mobile communication terminal is to be terminated (step S6).

If the user selects not to terminate the wireless Internet, it returns to the step of checking whether an Internet searching is to be performed.

If, however, the user selects to terminate the connection to the wireless Internet, the auxiliary display unit is switched to a standby state for displaying a message receiving state, a manner display mode, a remaining battery capacity display, a current time display and operated (step S7).

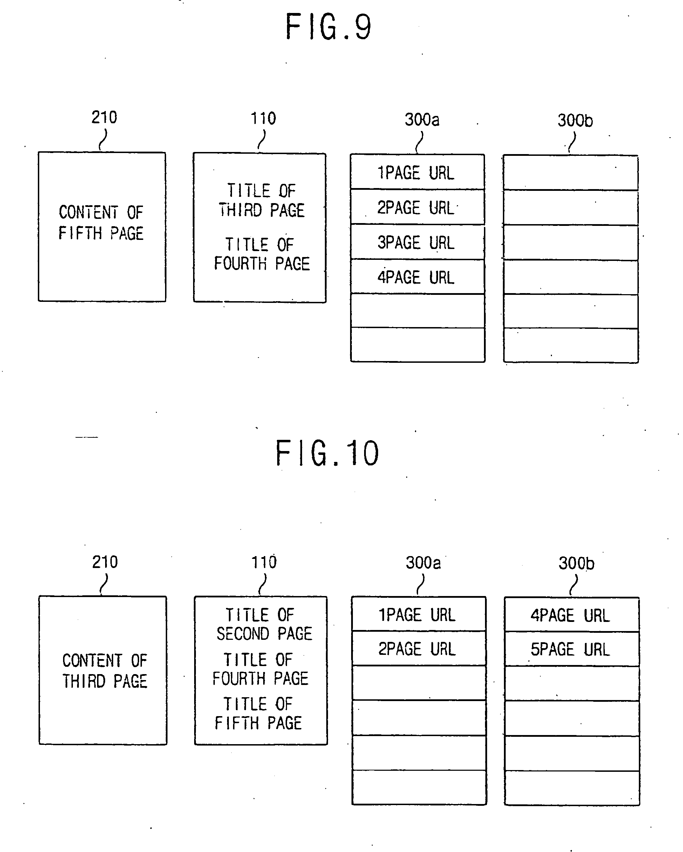

Figures 9, 10 and 11 are drawings illustrating an Internet searching method of the folder type mobile communication terminal in accordance with the present invention, in which the auxiliary display unit 110 is used as a history window in searching the Internet.

As shown in Figures 9, 10 and 11, the folder type mobile communication terminal includes a main display unit 210 for displaying a current Internet page for a user, an auxiliary display unit 110 for displaying titles of pages searched by a user; a first history database 300a and a second history database 300b for storing an Internet address corresponding to the title displayed on the auxiliary display unit 110.

The first history database 300a and the second history database 300b are included in a memory 300.

Addresses of each Internet page accessed by the user through the wireless Internet are sequentially stored in the first history database 300a, and lower addresses of the Internet pages accessed in occurrence of a back command for the Internet page are stored in the second history database 300b.

Figure 9 is a drawing illustrating that the auxiliary display unit is used a history window in searching the Internet.

The Internet searching method will now be described with reference to Figure 7.

When the user sequentially searches first, second, third, fourth and fifth Internet pages through a keypad manipulation, a content corresponding to the fifth Internet page is displayed on the current main display unit 210, while the titles of first, second, third and fourth Internet pages are sequentially displayed on the auxiliary display unit 110.

At this time, the mobile station modem 500 sequentially stores the addresses of first, second, third and fourth Internet pages in the first history database 300a and does not store an address of the Internet page in the second history database 300b.

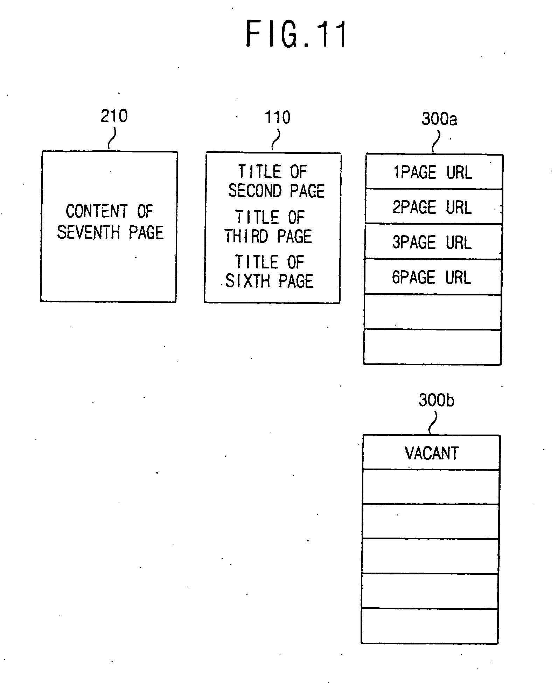

Figures 10 and 11 are drawings illustrating a method of using the auxiliary display unit of the folder type mobile communication terminal in accordance with the present invention.

Figure 10 shows an embodiment in which a user selects an address of a third auxiliary display unit.

When the user selects an address of third Internet page among the history list displayed on the auxiliary display unit 110 by manipulating the wheel button 120, the mobile station modem 500 which has received the output signal of the wheel button 120 displays the third Internet page on the main display unit 210 and sequentially displays the titles of first, second, fourth and fifth Internet pages on the auxiliary display unit 110.

In addition, the mobile station modem 500 sequentially stores the addresses of first and second Internet pages in the first history database 300a of the memory 300, and sequentially stores the addresses of fourth and fifth Internet pages in the second history database 300b of the memory 300.

Figure 11 shows an embodiment in which the user searches a new Internet page through the keypad.

When the user sequentially searches new sixth and seventh Internet pages by manipulating the keypad 120, the seventh Internet page is displayed on the main display unit 210 and titles of first, second, third and sixth Internet pages are displayed on the auxiliary display unit 110.

That is, in case that the user is connected to the new Internet page, the content of the second history database 300b is deleted and the content of the connected Internet page is stored in the first history database 300a.

Accordingly, in case that the user's connection is changed from the third Internet page to the sixth and seventh Internet pages, the addresses of first, second, third and sixth Internet pages are stored in the first history database 300a while the addresses of fourth and fifth Internet pages stored in the second history database 300b are deleted.

When the user is again connected to the third Internet page, the address of the sixth Internet page is stored in the second history database 300b, and addresses of the first and second Internet pages remain in the first history database 300a.

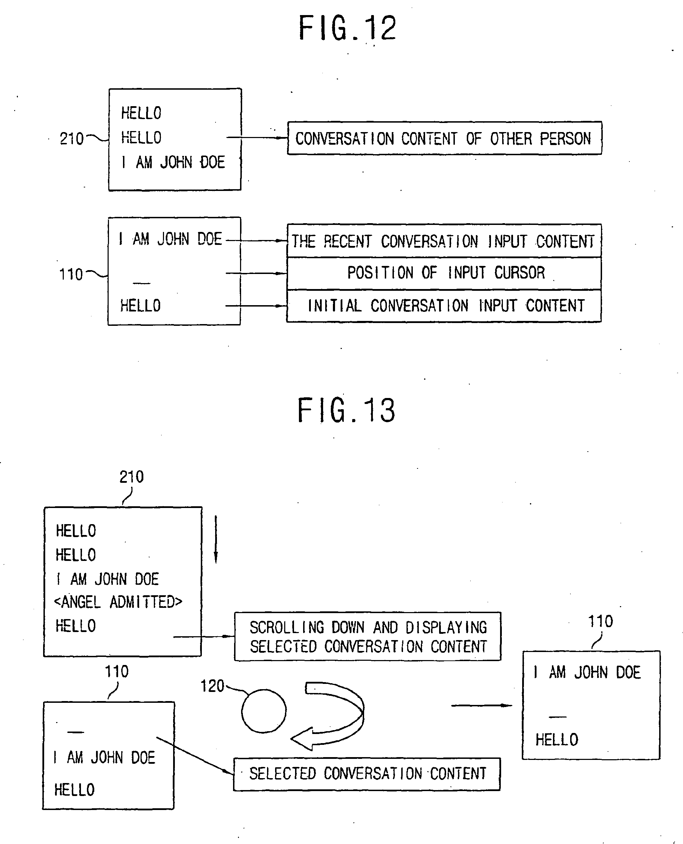

Figures 12, 13 and 14 are drawings illustrating a chatting method using the folder type mobile communication terminal in accordance with the present invention.

Figure 12 illustrates an embodiment that the auxiliary display unit of the present invention is used as a conversation input window in the Internet chatting.

As shown in Figure 12, the folder type mobile communication terminal includes a main display unit 210 for displaying a conversation content in the Internet chatting; and an auxiliary display unit 110 for displaying a conversation which has been inputted in the main display unit 210.

At the upper end of the auxiliary display unit 110, the most recently inputted conversation content is displayed.

That is, in the auxiliary display unit 110, the recent conversation input content is displayed at the upper end of an input cursor, and an initial conversation content is displayed at a lower end of the input cursor.

At this time, the user selects the conversation content displayed on the auxiliary display unit 110 and inputs it to the main display unit 210.

The conversation input content as much as the allocated memory size is stored in the memory 300 in the Internet chatting.

Figure 13 illustrates an embodiment in which the auxiliary display unit is utilized by using the wheel button.

When the user manipulates the cursor of the auxiliary display unit 110 by scrolling the wheel button 120 up and down, the conversation contents which have been inputted in the main display unit 210 through the keypad and stored in the memory are displayed in an input order.

At this time, the recently inputted conversation content is displayed at the upper end of the auxiliary display unit, and the initial inputted conversation content is displayed at the lower end of the auxiliary display unit.

That is, when the user upwardly scrolls the wheel button, the cursor is positioned at the recent conversation convent, while when the user downwardly scrolls the wheel button, the cursor is positioned at initially inputted conversation content.

The conversation content where the cursor is positioned is inputted to the main display unit 210 according to selection of the user.

For example, after the user inputs a conversation 'Hello' and 'I am John Doe' through the keypad, when a new person participates in the chatting, the user selects the conversation 'hello' displayed on the auxiliary display unit 110 by using the wheel button to thereby input it in the main display unit 210.

Namely, instead of inputting a conversation 'Hello' by manipulating the keypad, the user can designates the conversation 'Hello' displayed on the auxiliary display unit 110 from the inputted conversation contents and inputs it on the main display unit 210.

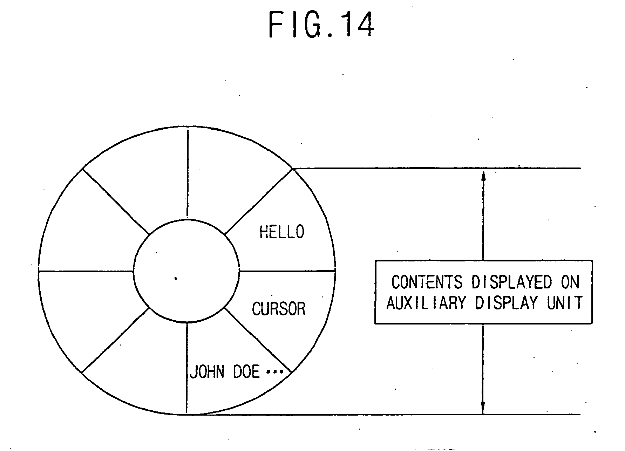

Figure 14 illustrates the wheel button in detail.

Whenever the wheel button is scrolled once, the cursor is moved up and down one by one. Accordingly, by scrolling the wheel button, the contents displayed on the auxiliary display unit 110 and the cursor are scrolled up and down according to the scroll of the wheel button.

As so far described, the folder type mobile communication terminal of the present invention has many advantages.

That is, for example, first, the folder type mobile communication terminal is constructed such that the user can view no matter whether the auxiliary display unit is in an opened state or in a closed state. Thus, the utilization of the auxiliary display unit can be heightened.

Secondly, since the utilization of the auxiliary display unit is improved by installing the wheel button, in case that a user chats by using the wireless Internet, the previously inputted conversation content can be inputted again by manipulating the wheel button. And, in searching information by using the wireless Internet, the previously searched Internet page can be easily searched only by manipulating the wheel button, so that the wireless Internet can be easily used.

Finally, since the auxiliary display unit is attached to the main body, the thickness of the folder can be reduced, so that the mobile communication terminal can be compact.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A folder type mobile communication terminal, comprising:
an antenna (410);
a transmitting and receiving unit (430) configured to connect to an internet page using a wireless communication method;
a keypad (130) configured to input a new internet page;
a main body (100) having an auxiliary display (110) configured to display a history of previously accessed internet pages;
a folder (200) having a main display (210) configured to display a current internet page and an opening unit (220) formed at a position facing the auxiliary display (110) in a folded state;
a memory (300) configured to store the history of address information of the previously accessed internet pages, wherein the stored history is based on user accesses on the previously accessed internet pages and an address information of a previously accessed internet page is removable from the memory (300); and
a wheel button (120) formed at one side of the main body (100) and configured to access one of the previously accessed internet pages stored in the memory (300), wherein the wheel button (120) is configured to scroll the history of previously accessed internet pages on the auxiliary display (110) when the wheel button (120) is scrolled and to select a previously accessed internet page, wherein the main display (210) is configured to display the selected previously accessed internet page.

2. The mobile communication terminal cited in claim 1, wherein the auxiliary display (110) is configured to display the history of previously accessed internet pages without the selected previously accessed internet page.

3. The mobile communication terminal cited in claim 1, wherein, if a new internet page is accessed after selecting a previously accessed internet page, the main display (210) is configured to display the new accessed internet page, and the auxiliary display (110) is configured to display a set of previously accessed internet pages of the history, which comprises the selected previously accessed internet page and the previously accessed internet pages accessed before the selected previously accessed internet page in the history.

4. The mobile communication terminal cited in claim 1, wherein, if a new internet page is accessed, the main display (210) is configured to display the new accessed internet page, and the auxiliary display (110) is configured to display the current internet page within the history of previously accessed internet pages.

5. The mobile communication terminal cited in claim 1, wherein the history of the previously accessed internet pages is sequentially stored in the memory (300),
wherein the memory (300) comprises a first history database (300a) and a second history database (300b), the first history database (300a) and the second history database (300b) being configured to store address information corresponding to a previously accessed internet page displayed on the auxiliary display (110).

6. The mobile communication terminal cited in claim 5, wherein:
if a previously accessed internet page is selected in the auxiliary display (110), the first history database (300a) is configured to store address information of previously accessed internet pages accessed before the selected previously accessed internet page in the history, and the second history database (300a) is configured to store address information of previously accessed internet pages accessed after the selected previously accessed internet page in the history;
if a new internet page is accessed and displayed on the main display (210), the second history database (300b) is configured to delete the stored address information and the first history database (300a) is configured to store the address information of the new accessed internet page.

7. The mobile communication terminal cited in claim 1, wherein the auxiliary display (110) is configured to display titles of the previously accessed internet pages of the history.

8. The mobile communication terminal cited in claim 1, wherein the main body (100) and the folder (200) are connected by a rotational shaft and the main body (100) and the folder (200) are rotatable.

9. The mobile communication terminal cited in claim 8, wherein the keypad (130) is located in the main body (100).

10. The mobile communication terminal cited in claim 9, wherein the keypad (130) is exposed when the folder (200) is opened corresponding to the main body (100).

11. The mobile communication terminal cited in claim 10, wherein the auxiliary display (110) displays at least one of information relative to an electric field strength, whether a message has received, and time.

12. An operating method of a folder type mobile communication terminal comprising
a main body (100) with an auxiliary display (110); and
a folder with a main display (210) and an opening unit (220) formed at a position facing the auxiliary display (110) in a folded state,
the method comprising the steps of:
connecting (S1) to the Internet using the wireless communication method;
inputting and searching new internet pages;
displaying, on the main display (210), a current internet page;
**characterized by**
storing a history of address information of internet pages previously accessed by a user in a memory;
displaying, on the auxiliary display (110), a history of previously accessed internet pages, wherein the stored history is based on user accesses on the previously accessed internet pages and an address information of a previously accessed internet page is removable from the memory;
accessing one of the previously accessed internet pages stored in the memory by a wheel button, wherein the history of previously accessed internet pages on the auxiliary display is scrolled, when the wheel button is scrolled, and a previously accessed internet page is selected by the wheel button, wherein the selected previously accessed internet page is displayed by the main display.

13. The method as claimed in claim 12, further comprises:
sequentially storing addresses of each accessed internet page in a first history database (300a); and
storing lower addresses of an internet page accessed according to a back command in a second history database (300b),
wherein the address information stored in the second history database (300b) is deleted when a new Internet page is accessed.

14. The method of claim 13, wherein if the user moved to a new Internet page that does not exist in the history list, the addresses stored in the second history database (300b) are deleted.

15. The operating method of claim 12, wherein, on the auxiliary display (110), titles of the previously accessed internet pages of the history are displayed.

16. The method of claim 12, further comprising:
performing (S2) a general phone function or a message transmission and reception function if a user is not connected to the Internet.

## Patentansprüche

1. Klappbares Mobilkommunikationsendgerät, das umfasst:
eine Antenne (410);
eine Sende- und Empfangseinheit (430), die konfiguriert ist, sich unter Verwendung eines drahtlosen Kommunikationsverfahrens mit einer Internetseite zu verbinden;
ein Tastenfeld (130), das konfiguriert ist, um eine neue Internetseite einzugeben;
einen Hauptkörper (200), der eine Hilfsanzeige (110) aufweist, die konfiguriert ist, um einen Verlauf zuvor besuchter Internetseiten anzuzeigen;
eine Klappe (200), die eine Hauptanzeige (210) aufweist, die konfiguriert ist, um eine aktuelle Internetseite anzuzeigen, und eine Öffnungseinheit (220), die an einer Position gebildet ist, die in einem zugeklappten Zustand der Hilfsanzeige (110) gegenüber liegt;
einen Speicher (300), der konfiguriert ist, um den Verlauf der Adressinformationen der zuvor besuchten Internetseiten zu speichern, wobei der gespeicherte Verlauf auf den Anwenderbesuchen auf den zuvor besuchten Internetseiten basiert und Adressinformationen einer zuvor besuchten Internetseite aus dem Speicher (300) entfernt werden können; und
eine Radtaste (120), die an einer Seite des Hauptkörpers (100) gebildet und konfiguriert ist, um eine der zuvor besuchten Internetseiten, die im Speicher gespeichert sind, zu besuchen, wobei die Radtaste (120) konfiguriert ist, um auf der Hilfsanzeige (110) durch den Verlauf der zuvor besuchten Intemetseiten zu scrollen, wenn die Radtaste (120) gedreht wird, und eine zuvor besuchte Internetseite auszuwählen, wobei die Hauptanzeige (210) konfiguriert ist, um die ausgewählte zuvor besuchte Internetseite anzuzeigen.

2. Mobilkommunikationsendgerät nach Anspruch 1, wobei die Hilfsanzeige (110) konfiguriert ist, um den Verlauf der zuvor besuchten Internetseiten ohne die ausgewählte zuvor besuchte Internetseite anzuzeigen.

3. Mobilkommunikationsendgerät nach Anspruch 1, wobei dann, wenn auf eine neue Internetseite zugegriffen wird, nachdem eine zuvor besuchte Internetseite ausgewählt ist, die Hauptanzeige (210) konfiguriert ist, um die neu besuchte Internetseite anzuzeigen, und die Hilfsanzeige (110) konfiguriert ist, um eine Gruppe zuvor besuchter Internetseiten des Verlaufs anzuzeigen, die die ausgewählte zuvor besuchte Internetseite und die zuvor besuchten Internetseiten, die im Verlauf vor der ausgewählten zuvor besuchten Internetseite besucht wurden, umfasst.

4. Mobilkommunikationsendgerät nach Anspruch 1, wobei dann, wenn eine neue Internetseite besucht wird, die Hauptanzeige (210) konfiguriert ist, um die neue besuchte Internetseite anzuzeigen, und die Hilfsanzeige (110) konfiguriert ist, um die aktuelle Internetseite innerhalb des Verlaufs der zuvor besuchten Internetseiten anzuzeigen.

5. Mobilkommunikationsendgerät nach Anspruch 1, wobei der Verlauf der zuvor besuchten Internetseiten der Reihe nach im Speicher (300) gespeichert ist,
wobei der Speicher (300) eine erste Verlaufsdatenbank (300a) und eine zweite Verlaufsdatenbank (300b) umfasst, wobei die erste Verlaufsdatenbank (300a) und die zweite Verlaufsdatenbank (300b) konfiguriert sind, um Adressinformationen, die einer zuvor besuchten Internetseite entsprechen, die auf der Hilfsanzeige (110) angezeigt wird, zu speichern.

6. Mobilkommunikationsendgerät nach Anspruch 5, wobei:
dann, wenn eine zuvor besuchte Internetseite in der Hilfsanzeige (110) ausgewählt ist, die erste Verlaufsdatenbank (300a) konfiguriert ist, um die Adressinformationen zuvor besuchter Internetseiten, die vor der ausgewählten zuvor besuchten Internetseite besucht wurden, im Verlauf zu speichern, und die zweite Verlaufsdatenbank (300a) konfiguriert ist, um die Adressinformationen zuvor besuchter Internetseiten, die nach der ausgewählten zuvor besuchten Internetseite besucht wurden, im Verlauf zu speichern;
dann, wenn eine neue Internetseite besucht und auf der Hauptanzeige (210) angezeigt wird, die zweite Verlaufsdatenbank (300b) konfiguriert ist, um die gespeicherten Adressinformationen zu löschen, und die erste Verlaufsdatenbank (300a) konfiguriert ist, um die Adressinformationen der neuen besuchten Internetseite zu speichern.

7. Mobilkommunikationsendgerät nach Anspruch 1, wobei die Hilfsanzeige (110) konfiguriert ist, um die Titel der zuvor besuchten Internetseiten des Verlaufs anzuzeigen.

8. Mobilkommunikationsendgerät nach Anspruch 1, wobei der Hauptkörper (100) und die Klappe (200) durch eine Drehachse verbunden sind und der Hauptkörper (100) und die Klappe (200) drehbar sind.

9. Mobilkommunikationsendgerät nach Anspruch 8, wobei sich das Tastenfeld (130) im Hauptkörper (100) befindet.

10. Mobilkommunikationsendgerät nach Anspruch 9, wobei das Tastenfeld (130) freigelegt ist, wenn die Klappe (200) entsprechend dem Hauptkörper (100) geöffnet ist.

11. Mobilkommunikationsendgerät nach Anspruch 10, wobei die Hilfsanzeige (110) Informationen bezüglich einer elektrischen Feldstärke und/oder ob eine Nachricht empfangen wurde und/oder die Zeit anzeigt.

12. Betriebsverfahren eines klappbaren Mobilkommunikationsendgeräts, das umfasst:
einen Hauptkörper (100) mit einer Hilfsanzeige (110); und
eine Klappe mit einer Hauptanzeige (210) und einer Öffnungseinheit (220), die an einer Position gebildet ist, die in einem zugeklappten Zustand der Hilfsanzeige (110) gegenüber liegt,
wobei das Verfahren die Schritte umfasst:
Verbinden (S1) mit dem Internet unter Verwendung des drahtlosen Kommunikationsverfahrens;
Eingeben und Suchen neuer Internetseiten;
Anzeigen einer aktuellen Internetseite auf der Hauptanzeige (210);
**gekennzeichnet durch**
Speichern eines Verlaufs von Adressinformationen von Internetseiten, die vorher von einem Anwender besucht wurden, in einem Speicher;
Anzeigen eines Verlaufs zuvor besuchter Internetseiten auf der Hilfsanzeige (110), wobei der gespeicherte Verlauf auf den Anwenderbesuchen auf den zuvor besuchten Internetseiten basiert und Adressinformationen einer zuvor besuchten Internetseite aus dem Speicher entfernt werden können;
Besuchen einer der zuvor besuchten Internetseiten, die im Speicher gespeichert sind, **durch** eine Radtaste, wobei der Verlauf der zuvor besuchten Intemetseiten auf der Hilfsanzeige gescrollt wird, wenn die Radtaste gedreht wird, und eine zuvor besuchte Internetseite **durch** die Radtaste ausgewählt wird, wobei die zuvor besuchte Internetseite **durch** die Hauptanzeige angezeigt wird.

13. Verfahren nach Anspruch 12, das ferner umfasst:
Speichern der Adressen jeder besuchten Internetseite der Reihe nach in einer ersten Verlaufsdatenbank (300a); und
Speichern der niedrigeren Adressen einer besuchten Internetseite entsprechend einem Zurück-Befehl in einer zweiten Verlaufsdatenbank (300b),
wobei die Adressinformationen, die in der zweiten Verlaufsdatenbank (300b) gespeichert sind, gelöscht werden, wenn eine neue Internetseite besucht wird.

14. Verfahren nach Anspruch 13, wobei dann, wenn sich der Anwender zu einer neuen Intemetseite bewegt hat, die in der Verlaufsliste nicht vorhanden ist, die Adressen, die in der zweiten Verlaufsdatenbank (300b) gespeichert sind, gelöscht werden.

15. Betriebsverfahren nach Anspruch 12, wobei auf der Hilfsanzeige (110) Titel der zuvor besuchten Internetseiten des Verlaufs angezeigt werden.

16. Verfahren nach Anspruch 12, das ferner umfasst:
Ausführen (S2) einer allgemeinen Telephonfunktion oder einer Nachrichtenübertragungs- und Empfangsfunktion, wenn ein Anwender nicht mit dem Internet verbunden ist.

## Revendications

1. Terminal de communication mobile de type pliant, comprenant :
une antenne (410) ;
une unité d'émission et de réception (430) configurée pour se connecter à une page Internet en utilisant un procédé de communication sans fil ;
un clavier (130) configuré pour entrer une nouvelle page Internet ;
un corps principal (100) comportant un affichage auxiliaire (110) configuré pour afficher un historique des pages Internet précédemment accédées ;
un plioir (200) comportant un affichage principal (210) configuré pour afficher une page Internet actuelle et une unité d'ouverture (220) formée à une position faisant face à l'affichage auxiliaire (110) dans un état plié ;
une mémoire (300) configurée pour stocker l'historique d'informations d'adresse des pages Internet précédemment accédées, dans lequel l'historique stocké est basé sur des accès d'utilisateur aux pages Internet précédemment accédées et une information d'adresse d'une page Internet précédemment accédée peut être enlevée de la mémoire (300) ; et
une molette (120) formée sur un côté du corps principal (100) et configurée pour accéder à l'une des pages Internet précédemment accédées stockées dans la mémoire (300), dans lequel la molette (120) est configurée pour parcourir l'historique des pages Internet précédemment accédées sur l'affichage auxiliaire (110) lorsque la molette (120) est tournée et pour sélectionner une page Internet précédemment accédée, dans lequel l'affichage principal (210) est configuré pour afficher la page Internet précédemment accédée sélectionnée.

2. Terminal de communication mobile selon la revendication 1, dans lequel l'affichage auxiliaire (110) est configuré pour afficher l'historique des pages Internet précédemment accédées sans la page Internet précédemment accédée sélectionnée.

3. Terminal de communication mobile selon la revendication 1, dans lequel, si une nouvelle page Internet est accédée après la sélection d'une page Internet précédemment accédée, l'affichage principal (210) est configuré pour afficher la nouvelle page Internet accédée, et l'affichage auxiliaire (110) est configuré pour afficher un ensemble de pages Internet précédemment accédées de l'historique, qui comprend la page Internet précédemment accédée sélectionnée et les pages Internet précédemment accédées qui ont été accédées avant la page Internet précédemment accédée sélectionnée dans l'historique.

4. Terminal de communication mobile selon la revendication 1, dans lequel, si une nouvelle page Internet est accédée, l'affichage principal (210) est configuré pour afficher la nouvelle page Internet accédée, et l'affichage auxiliaire (110) est configuré pour afficher la page Internet actuelle dans l'historique des pages Internet précédemment accédées.

5. Terminal de communication mobile selon la revendication 1, dans lequel l'historique des pages Internet précédemment accédées est séquentiellement stocké dans la mémoire (300),
dans lequel la mémoire (300) comprend une première base de données d'historique (300a) et une deuxième base de données d'historique (300b), la première base de données d'historique (300a) et la deuxième base de données d'historique (300b) étant configurées pour stocker des informations d'adresse correspondant à une page Internet précédemment accédée affichée sur l'affichage auxiliaire (110).

6. Terminal de communication mobile selon la revendication 5, dans lequel :
si une page Internet précédemment accédée est sélectionnée dans l'affichage auxiliaire (110), la première base de données d'historique (300a) est configurée pour stocker des informations d'adresse des pages Internet précédemment accédées qui ont été accédées avant la page Internet précédemment accédée sélectionnée dans l'historique, et la deuxième base de données d'historique (300b) est configurée pour stocker des informations d'adresse des pages Internet précédemment accédées qui ont été accédées après la page Internet précédemment accédée sélectionnée dans l'historique ;
si une nouvelle page Internet est accédée et affichée sur l'affichage principal (210), la deuxième base de données d'historique (300b) est configurée pour supprimer les informations d'adresse stockées et la première base de données d'historique (300a) est configurée pour stocker les informations d'adresse de la nouvelle page Internet accédée.

7. Terminal de communication mobile selon la revendication 1, dans lequel l'affichage auxiliaire (110) est configuré pour afficher des titres des pages Internet précédemment accédées de l'historique.

8. Terminal de communication mobile selon la revendication 1, dans lequel le corps principal (100) et le plioir (200) sont reliés par un arbre rotationnel et le corps principal (100) et le plioir (200) peuvent être tournés.

9. Terminal de communication mobile selon la revendication 8, dans lequel le clavier (130) est situé dans le corps principal (100).

10. Terminal de communication mobile selon la revendication 9, dans lequel le clavier (130) est exposé lorsque le plioir (200) est ouvert par rapport au corps principal (100).

11. Terminal de communication mobile selon la revendication 10, dans lequel l'affichage auxiliaire (110) affiche au moins l'une d'informations relatives à une force de champ électrique, si un message a été reçu, et l'heure.

12. Procédé de fonctionnement d'un terminal de communication mobile de type pliant, comprenant :
un corps principal (100) avec un affichage auxiliaire (110) ; et
un plioir avec un affichage principal (210) et une unité d'ouverture (220) formée à une position faisant face à l'affichage auxiliaire (110) dans un état plié,
le procédé comprenant les étapes de :
la connexion (S1) à l'Internet en utilisant le procédé de communication sans fil ;
l'entrée et la recherche de nouvelles pages Internet ;
l'affichage, sur l'affichage principal (210), d'une page Internet actuelle ;
**caractérisé par**
le stockage d'un historique d'informations d'adresse de pages Internet précédemment accédées par un utilisateur dans une mémoire ;
l'affichage, sur l'affichage auxiliaire (110), d'un historique de pages Internet précédemment accédées, dans lequel l'historique stocké est basé sur des accès d'utilisateur aux pages Internet précédemment accédées et une information d'adresse d'une page Internet précédemment accédée peut être enlevée de la mémoire ;
l'accès à l'une des pages Internet précédemment accédées stockées dans la mémoire par une molette, dans lequel l'historique des pages Internet précédemment accédées sur l'affichage auxiliaire est parcouru lorsque la molette est tournée, et une page Internet précédemment accédée est sélectionnée par la molette, dans lequel la page Internet précédemment accédée sélectionnée est affichée par l'affichage principal.

13. Procédé selon la revendication 12, comprenant en outre :
le stockage séquentiel d'adresses de chaque page Internet accédée dans une première base de données d'historique (300a) ; et
le stockage d'adresses inférieures d'une page Internet accédée en fonction d'une commande de retour dans une deuxième base de données d'historique (300b),
dans lequel les informations d'adresse stockées dans la deuxième base de données d'historique (300b) sont supprimées lorsqu'une nouvelle page Internet est accédée.

14. Procédé selon la revendication 13, dans lequel, si l'utilisateur est passé à une nouvelle page Internet qui n'existe pas dans la liste d'historique, les adresses stockées dans la deuxième base de données d'historique (300b) sont supprimées.

15. Procédé de fonctionnement selon la revendication 12, dans lequel, sur l'affichage auxiliaire (110), les titres des pages Internet précédemment accédées de l'historique sont affichés.

16. Procédé selon la revendication 12, comprenant en outre :
l'exécution (S2) d'une fonction générale de téléphone ou d'une fonction de transmission et de réception de message si un utilisateur n'est pas connecté à l'Internet.
